Europäisches Patentamt

European Patent Office

Office européen des brevets

(11) Publication number: **0 261 767**
A1

(12) **EUROPEAN PATENT APPLICATION**

(21) Application number: 87306135.2

(22) Date of filing: 10.07.87

(51) Int. Cl.⁴: **B65G 59/10** , G07F 13/10

(30) Priority: 02.09.86 GB 8621189

(43) Date of publication of application:
30.03.88 Bulletin 88/13

(84) Designated Contracting States:
DE FR GB

(71) Applicant: GENERAL FOODS LIMITED

Banbury Oxfordshire, OX16 7QU(GB)

(72) Inventor: Newman, Alec Thomas
Greenways, Warmington
Banbury, Oxfordshire(GB)
Inventor: Rhodes, David
2 Upper Wardington Cottages
Upper Wardington, Oxfordshire(GB)

(74) Representative: Allard, Susan Joyce et al
BOULT, WADE & TENNANT 27 Furnival Street
London EC4A 1PQ(GB)

(54) **Drink dispensing machines and cup dispensers therefor.**

(57) A cup dispenser for a drink dispensing machine has support means through which the bottom cup of a stack projects downwardly. The support means comprises an inwardly tapered surface (17) in the downward direction which in its rest position laterally engages the bottom cup. The support means are reciprocally movable by a downward pull on the bottom cup to withdraw the inwardly tapered surface and thereby release the bottom cup. Means (18) are provided for retaining the next succeeding cup when the support means are withdrawn from the bottom cup. Means (16) are also provided for subsequently returning the inwardly tapered surface to its rest position.

FIG. 1.

# DRINK DISPENSING MACHINES AND CUP DISPENSERS THEREFOR

This invention relates to drink dispensing machines and cup dispensers therefor.

In a drink dispensing machine it is usual to provide a stack of cups from which a user removes a cup before operating the machine to dispense the required drink.

It is also known to provide a stack of cups in which each cup has a recess in its base pre-packed with at least the basic ingredient of the drink required. In this case the cups are stacked with the recessed base lowermost.

According to the invention there is provided a cup dispenser for a drink dispensing machine in which the bottom cup of a stack of cups projects downwardly through support means, wherein the support means comprises and inwardly tapered surface in the downward direction which in its rest position laterally engages the bottom cup, and are reciprocally movable by a downward pull on the bottom cup to withdraw the inwardly tapered surface and thereby release the bottom cup, means being provided for retaining the next succeeding cup when the support means are withdrawn from the bottom cup, and means being provided for subsequently returning the inwardly tapered surface to its rest position.

Preferably the support means comprises a ring surrounding the bottom cup, and a plurality of latches mounted in the ring, each latch providing said inwardly tapered surface and being mounted in the ring for pivotal movement between a first position in which the inwardly tapered surface is in its rest position and a second position in which the inwardly tapered surface is withdrawn.

In one embodiment of the invention four latches are mounted in the ring.

It is also preferred that each cup has a laterally projecting rim, and the means for retaining the next succeeding cup is a flange on or movable with each latch which in the withdraw position of the latch engages beneath the rim of the next succeeding cup.

Spring means are preferably provided for returning the inwardly tapered surface to its rest position and for urging the surface towards the bottom cup of the stack.

The invention also provides a drink dispensing machine having a cup dispenser as defined above.

By way of example, a specific embodiment in accordance with the invention will be described with reference to the accompanying drawings in which:-

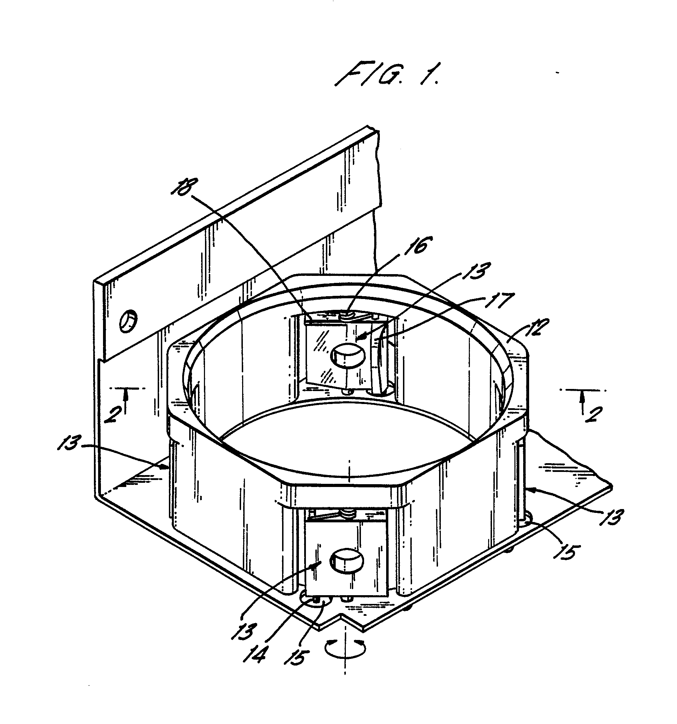

Figure 1 is a perspective view of a cup dispenser of a drink dispensing machine;

Figure 2 is a section along line 2-2 in Figure 1 showing the bottom two cups of a stack of cups and the latch means in their rest position; and

Figure 3 is a similar view as Figure 2 showing the latch means in their withdrawn position.

This example concerns a drink dispensing machine in which the user removes the cup from a stack and places it beneath one or more outlets for reception of an ingredient and/or water. In this embodiment the cup are of the kind having a recess in their base in which the main ingredient, e.g. coffee, is pre-packed. On removal of a cup from the stack, the user removes the sealed insert and adds milk and/or sugar as required and hot water from the drink dispensing machine.

The invention relates to the dispensing of the cups one at a time from the bottom of the stack and thus the following description will be limited to the cup dispenser.

Referring to the drawings, each cup 10 has a laterally projecting rim 11 and the stack of cups extends upwardly from a fixed support ring 12. Only the bottom two cups 20, 21 of the stack as shown.

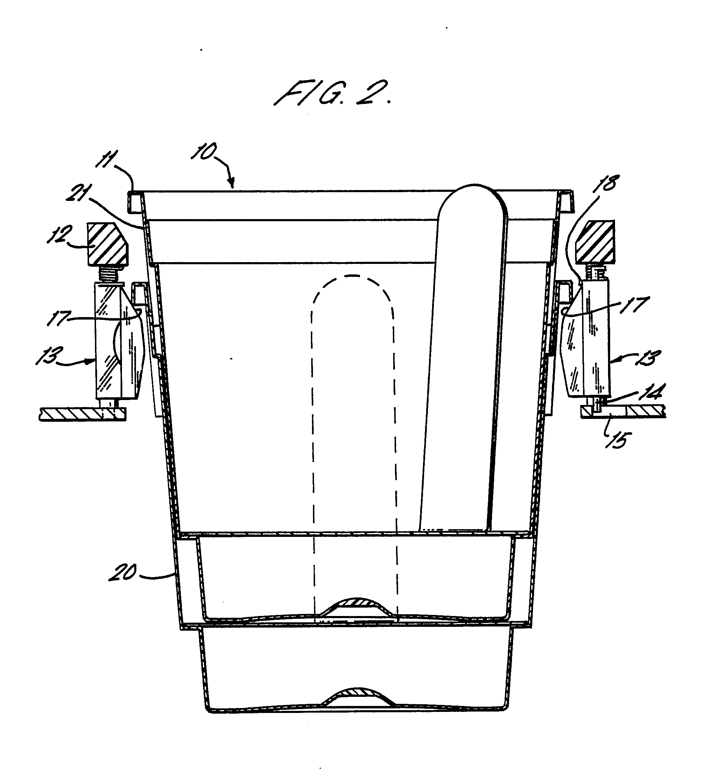

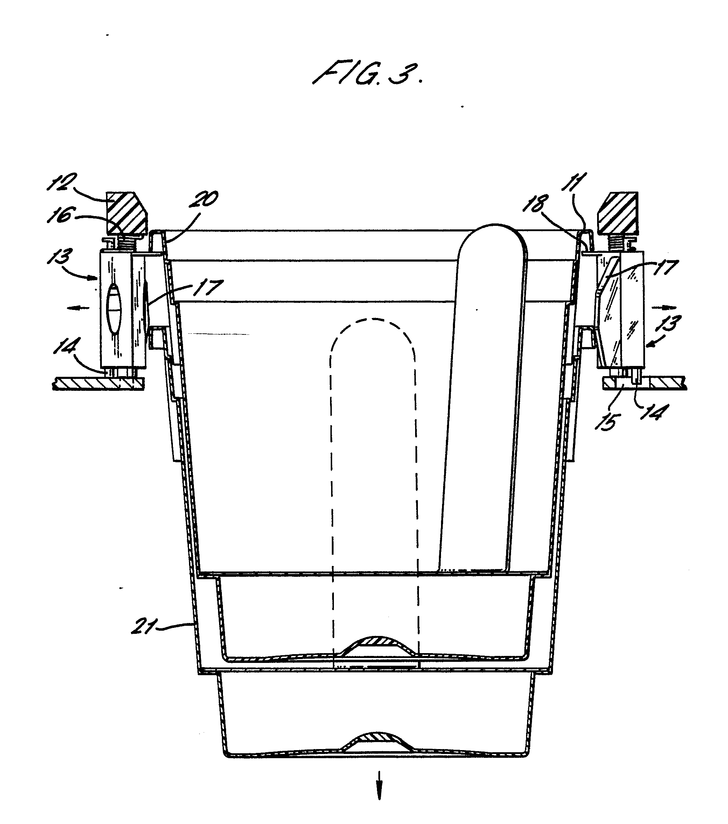

The ring 12 has an inner diameter which allows the cups to pass therethrough subject to the control of latches 13 which ensure that the cups are dispensed one at a time. In this embodiment there are four latches 13, each mounted on the ring 12 for pivotal reciprocal movement about a central vertical axis between an inner rest position (Figure 2) and an outer withdrawn position (Figure 3). Both extreme positions are determined by a stop pin 14 located in a hole 15, and a spring 16 urges the respective latch towards its rest position.

Each latch 13 has an inwardly facing surface 17 which at its upper end is inwardly tapered in a downward direction, then substantially vertical, and at its lower end is outwardly tapered in a downward direction. The surface 17 thereby comprises a cam and the rin 11 of the bottom cup 20 is the cam follower.

Each latch also carries a projection 18 disposed above the surface 17 for engagement with the underside of the rim 11 of the next succeeding cup 21 above the bottom cup 20.

In operation, a stack of cups is inserted in the cup dispenser with the base of each cup lowermost. The latches 13 are in their rest positions (Figure 2) and the rim of the bottom cup 20 projecting through the ring 12 rests on the upper inwardly tapered portions of the latch surfaces 17. The user wishing to remove a cup from the stack pulls the bottom cup 20 downwardly. Downward movement of the bottom cup 20 pivots the latches 13 into their withdrawn positions (Figure 3) at which time the rim of the bottom cup engages the substantially vertical portions of the surface 17 of the latches 13. Simultaneously the next succeeding cup 21 which has moved downwardly with the bottom cup 20 is caught by the projections 18 which are now disposed beneath the rim 11 of the cup 21. Continuing downward movement of the bottom cup enables the springs 16 to return the latches to their rest positions. The bottom cup 20 is then free for use and the next succeeding cup 21 has become the bottom cup of the stack with its rim 11 resting on the upper inwardly tapered portions of the surface 17. The cycle may then be repeated.

The bottom cup 20 may be pulled down by hand, as described above, or the cup dispenser may be associated with a mechanism which is designed so that the bottom cup in the stack is passed off or pulled off automatically.

## Claims

1. A cup dispenser for a drink dispensing machine in which the bottom cup of a stack of cups projects downwardly through support means, wherein the support means comprises an inwardly tapered surface in the downward direction which in its rest position laterally engages the bottom cup, and are reciprocally movable by a downward pull on the bottom cup to withdraw the inwardly tapered surface and thereby release the bottom cup, means being provided for retaining the next succeeding cup when the support means are withdrawn from the bottom cup, and means being provided for subsequently returning the inwardly tapered surface to its rest position.

2. A cup dispenser as claimed in Claim 1, wherein the support means comprises a ring surrounding the bottom cup, and a plurality of latches mounted in the ring, each latch providing said inwardly tapered surface and being mounted in the ring for pivotal movement between a first position in which the inwardly tapered surface is in its rest position and a second position in which the inwardly tapered surface is withdrawn.

3. A cup dispenser as claimed in Claim 2, wherein four latches are mounted in the ring.

4. A cup dispenser as claimed in Claim 2 or Claim 3, wherein each cup has a laterally projecting rim, and the means for retaining the next succeeding cup is a flange on or movable with each latch which in the withdrawn position of the latch engages beneath the rim of the next succeeding cup.

5. A cup dispenser as claimed in any one of the preceding claims, wherein spring means are provided for returning the inwardly tapered surface to its rest position and for urging the surface towards the bottom cup of the stack.

6. A cup dispenser substantially as hereinbefore described with reference to and as shown in the accompanying drawings.

7. A drink dispensing machine having a cup dispenser as claimed in any one of the preceding claims.

# FIG. 1.

FIG. 2.

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 005 506  (JIHAA PLAST JOHNSON HÜLS)<br>* the whole document * | 1,4,5 | B 65 G  59/10<br>G 07 F  13/10 |
| X | US-A-3 407 966  (GAUFFIN)<br>* column 1, lines 43-68; column 3, lin3w 5-30; figures 1,2,6,7 * | 1,4,5 | |
| A | US-A-3 662 919  (SHMERLING)<br>* column 2, lines 4-15; figures 1-3 * | 1-3 | |
| A | EP-A-0 097 593  (MUNIER)<br>* page 1, line 16 - page 2, line 5; figure * | 1,2,7 | |

TECHNICAL FIELDS SEARCHED (Int. Cl.4)

A 47 F    1/00
B 65 G   59/00
G 07 F   13/00

The present search report has been drawn up for all claims

| Place of search | Date of completion of the search | Examiner |
|---|---|---|
| BERLIN | 27-11-1987 | SIMON J J P |

EPO FORM 1503 03.82 (P0401)